# EUROPEAN PATENT APPLICATION

(11) **EP 2 393 082 A2**
(43) Date of publication of application: **07.12.2011**
(21) Application number: 11162557.0
(22) Date of filing: 15.04.2011
(51) Int. Cl.: G10L 15/06

(54) **System and method of multi model adaptation and voice recognition**

(30) Priority: 07.06.2010 KR 20100053301
(71) Applicant: Seoby Electronics Co., Ltd., Manan-gu Anyang-si, Gyeonggi-do 430-032 (KR)
(72) Inventor: Lee, Sung-Sub, 430-032, Gyeonggi-do (KR)
(74) Representative: Röggla, Harald

(57) **Abstract**

Provided is a system of voice recognition that adapts and stores a voice of a speaker for each feature to each of a basic voice model and new independent multi models and provides stable real-time voice recognition through voice recognition using a multi adaptive model.

A method of multi model adaptation according to the exemplary embodiment of the present invention includes: selecting any one model designated by a speaker; extracting a feature vector used in a voice model from an inputted voice of the speaker; adapting the extracted feature vector by using a predetermined pronunciation information model and a predetermined basic voice model and thereafter, storing the corresponding feature vector in a model designated by the speaker among the plurality of models, and setting a flag indicating whether adaptation is executed; extracting a feature vector from a voice which the speaker inputs for voice recognition; selecting only models in which adaptation is executed by reading flags set in multi adaptive models; calculating similarity of adaptive values by sequentially comparing the models selected by reading the flags with the feature vectors extracted from the inputted voices of the speakers; and selecting one model having the maximum similarity and executing voice recognition through decoding when similarity calculation for all the selected models is completed.

## Description

### CROSS-REFERENCE TO RELATED APPLICATION

This application claims priority to and the benefit of Korean Patent Application No. 10-2010-0053301 filed in the Korean Intellectual Property Office on June 7, 2010, the entire contents of which are incorporated herein by reference.

### BACKGROUND OF THE INVENTION

### (a) Field of the Invention

The present invention relates to a voice recognition system, and more particularly, to a system and a method of multi model adaptation and voice recognition that adapt and store a speaker's voice for each feature to a basic voice model and new independent multi models and provide stable real-time voice recognition through voice recognition using multi adaptive models.

### (b) Description of the Related Art

A voice recognition system is configured to recognize voices of unspecific plural persons by seeking a speaker independent type having one speaker independent model without an exclusive model for each of users.

Since voice recognition is executed by a statistical modeling technique which is a base technique, a deviation in recognition rate occurs for each person and the recognition rate is varied depending on even a surrounding environment.

The recognition rate deteriorated by the surrounding environment can be improved using noise removing technology, but deterioration of the recognition rate by vocal features of different speakers cannot be improved by using the noise removing technology.

In order to solve a problem related to the deterioration of the recognition rate by the vocal features of the speakers, adaptive technology has been developed and used.

The adaptive technology can be classified as technology of tuning a voice model used in the voice recognition according to a vocal feature of a speaker who uses the voice model presently.

An adaptive method allows one model to be finally used in the voice recognition by adapting a voice of a speaker of which the voice is not well recognized to one basic voice model of the voice recognition system.

In addition, the voice recognition extracts and uses feature vectors (features parameters) which are needed information from the voice which the speaker vocalizes.

In particular, in the case where the voice recognition system is the speaker independent type having the speaker independent model, the voice recognition system makes a voice model by using multi-dimensional feature vectors and uses the voice model as a standard pattern in order to recognize voices of various persons.

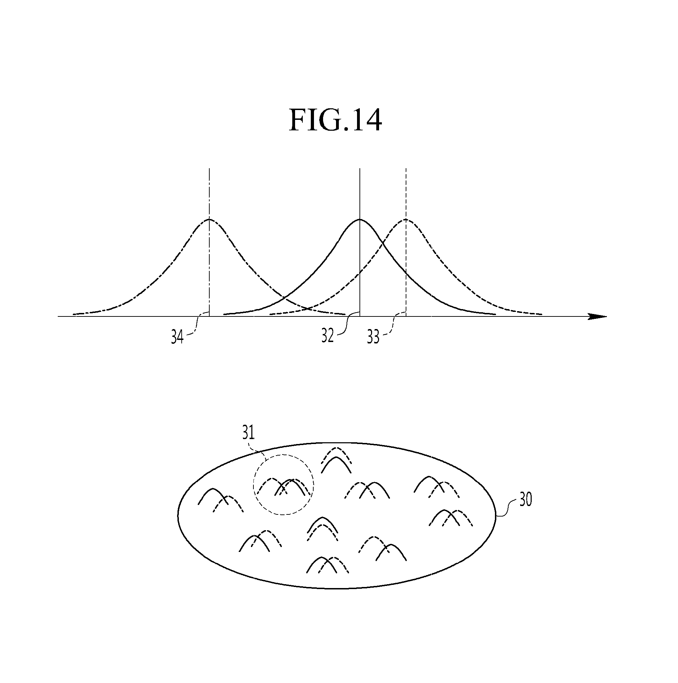

FIG. 14 as a diagram showing a deviation in variation of an average value of models according to adaptation of different speakers in a known voice recognition system, for example, shows a part of a voice model having 10-level elements.

As shown in FIG. 14, the voice model 31 can be expressed an average and a distribution of multi-dimensional vectors 32.

When adaptation is performed by inputting the voice of the speaker into the voice model 31, the average and distribution values vary according to a feature of a speaker which is subjected to adaptation. In the case of general adaptation, the average and distribution values are not considerably varied from average and distribution values 32 of a basic model 33, but in the case in which a speaker having peculiar vocals or an environmental factor is added, the average and distribution values are considerably varied 34 from the average and distribution values 32 of the basic model.

Accordingly, when several persons of which voices are not well recognized perform adaptation to the voice recognition system in sequence, the recognition rate sharply increases at first, but the recognition rate of a speaker who performed adaptation first gradually decreases as the persons sequentially perform adaptation and only the recognition rate of a speaker who performed adaptation last is high.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a system and a method of multi model adaptive and voice recognition that adapt and store a speaker's voice for each feature to a basic voice model and new independent multi models and provide stable real-time voice recognition through voice recognition using selection of multi adaptive models corresponding to input voices.

Further, the present invention has been made in an effort to provide a system and a method of multi model adaptive and voice recognition that configure an independent adaptive model for each speaker, an independent adaptive model for a voice color, and an independent adaptive model grouping speakers having a similar feature to provide stable real-time voice recognition through adaptation suitable for each independent model.

An exemplary embodiment of the present invention provides a system of multi model adaptation, the system including: a model number selecting unit selecting any one model designated by a speaker for voice adaptation; a feature extracting unit extracting feature vectors from a voice of the speaker inputted for adaptation; an adaption processing unit adapting the voice of the speaker by applying predetermined reference values of a pronunciation information model and a basic voice model and thereafter, storing the corresponding voice in a model designated by the speaker, and setting a flag to a model in which adaptation is executed; and a multi adaptive model constituted by a plurality of models and storing a voice adapted for each feature according to speaker's designation.

Another exemplary embodiment of the present invention provides a system of voice recognition, the system including: a feature extracting unit extracting feature vectors required for voice recognition from an inputted voice of a speaker; a model determining unit sequentially selecting only models in which flags are set to adaptation from a multi adaptive model; a similarity calculating unit extracting a model having the maximum similarity by calculating similarity between the feature vectors extracted from the inputted voice of the speaker and an adaptive values stored in the selected models; and a voice recognizing unit executing voice recognition through decoding adopting the adaptive value stored in the model having the maximum similarity and a value stored in a model set through study.

Another exemplary embodiment of the present invention provides a method of multi model adaptation, the method including: selecting any one model designated by a speaker; extracting a feature vector used in a voice model from an inputted voice of the speaker; and adapting the extracted feature vector by applying reference values by using a predetermined pronunciation information model and a predetermined basic voice model and thereafter, storing the corresponding feature vector in a model designated by the speaker among the plurality of models, and setting a flag indicating whether adaptation is executed.

Another exemplary embodiment of the present invention provides a method of voice recognition, the method including: extracting feature vectors from inputted voices of speakers requesting voice recognition; selecting only models in which adaptation is executed by reading flags set in multi adaptive models; calculating similarity of adaptive values by sequentially comparing the models selected by reading the flags with the feature vectors extracted from the inputted voices of the speakers; and selecting one model having the maximum similarity and executing voice recognition through decoding when similarity calculation for all the selected models is completed.

Another exemplary embodiment of the present invention provides a method of voice recognition, the method including: extracting feature vectors from inputted voices of speakers requesting voice recognition; selecting only speaker identification models by reading flags set in multi adaptive models; calculating similarity of adaptive values by sequentially comparing the selected speaker identification models with the feature vectors extracted from the inputted voices of the speakers; and selecting one model having the maximum similarity and executing voice recognition through decoding when similarity calculation for all the speaker identification models is completed.

Another exemplary embodiment of the present invention provides a method of voice recognition, the method including: extracting feature vectors from inputted voices of speakers requesting voice recognition; selecting only voice color models by reading flags set in multi adaptive models; calculating similarity of adaptive values by sequentially comparing the selected voice color models with the feature vectors extracted from the inputted voices of the speakers; and selecting one model having the maximum similarity and executing voice recognition through decoding when similarity calculation for all the voice color models is completed.

Another exemplary embodiment of the present invention provides a method of multi model adaptation, the method including: selecting any one model designated by a speaker; extracting a feature vector used in an adaptive voice model from an inputted voices of the speaker; adapting the feature vector by applying a predetermined pronunciation information model and a predetermined basic voice model and thereafter, storing the adapted feature vector in the designated model to generate an adaptive model; and making a similarity level into a binary tree by comparing similarity between the adaptive model generated during the process and the basic voice model.

Another exemplary embodiment of the present invention provides a method of voice recognition, the method including: extracting feature vectors from inputted voices of speakers requesting voice recognition; calculating similarity between a basic model and subword models of commands set in all adaptive models, and selecting a model having the largest vieterbi score and executing voice recognition through decoding in following frame when a difference in vieterbi scores is equal to or more than a predetermined value.

Another exemplary embodiment of the present invention provides a method of multi model adaptation, the method including: selecting any one model designated by a speaker; extracting a feature vector used in an adaptive voice model from an inputted voice of the speaker and executing adaptation; studying a feature vector corresponding to time information of a keyword in time information of a voice command in executing adaptation through a dynamic time warping model; and storing information regarding the adaptive model and the studied dynamic time warping model in the model designated by the speaker during the process.

Another exemplary embodiment of the present invention provides a method of voice recognition, the method including: extracting feature vectors from inputted voices of speakers requesting voice recognition; performing decoding by applying a basic voice model; extracting time information of a word calculated during the decoding and judging whether the extracted time information is a time information stream of a word corresponding to a keyword; extracting a feature vector corresponding to the time information of the word and calculating similarity between the extracted feature vector and a dynamic time warping model when the time information is the time information stream of the word corresponding to the keyword; and executing voice recognition through decoding by selecting a model having the maximum similarity.

Another exemplary embodiment of the present invention provides a system for multi model adaptation in a voice recognition system in which a multi microphone of which positional information is designated is applied; and a position of a sound source inputted for adaption is judged by using a beam forming technique and the position is adapted to a corresponding model.

According to the exemplary embodiments of the present invention, it is possible to maximize an effect of voice adaptation by using different independent models for each person or group without adapting voices of several persons by using only one model in voice recognition adaptation of a voice recognition system, and improve reliability in using the voice recognition system and provide a large effect in popular propagation by providing accurate voice recognition rate.

### BRIEF DESCRIPTION OF THE DRAWINGS

FIG. 1 is a diagram schematically showing a configuration of a multi model adaptation system according to an exemplary embodiment of the present invention.
FIG. 2 is a diagram schematically showing a configuration of a voice recognition system according to an exemplary embodiment of the present invention.
FIG. 3 is a diagram schematically showing a multi model adaptation procedure according to a first exemplary embodiment of the present invention.
FIG. 4 is a diagram schematically showing a voice recognition procedure according to the first exemplary embodiment of the present invention.
FIG. 5 is a diagram schematically showing a voice recognition procedure according to a second exemplary embodiment of the present invention.
FIG. 6 is a diagram schematically showing a voice recognition procedure according to a third exemplary embodiment of the present invention.
FIG. 7 is a diagram schematically showing a multi model adaptation procedure according to the second exemplary embodiment of the present invention.
FIG. 8 is a diagram showing a similarity binary tree in the multi model adaptation procedure according to the second exemplary embodiment of the present invention.
FIG. 9 is a diagram schematically showing a voice recognition procedure according to a fourth exemplary embodiment of the present invention.
FIG. 10 is a diagram schematically showing a multi model adaptation procedure according to the third exemplary embodiment of the present invention.
FIG. 11 is a diagram schematically showing a voice recognition procedure according to a fifth exemplary embodiment of the present invention.
FIG. 12 is a diagram schematically showing a voice recognition procedure according to a sixth exemplary embodiment of the present invention.
FIG. 13 is a diagram showing multi model adaptation for each position using multi microphones according to the third exemplary embodiment of the present invention.
FIG. 14 is a diagram showing a deviation in variation of an average value of models according to adaptation of different speakers in a known voice recognition system.

### DETAILED DESCRIPTION OF THE EMBODIMENTS

The present invention will be described more fully hereinafter with reference to the accompanying drawings, in which exemplary embodiments of the invention are shown.

As those skilled in the art would realize, the described embodiments may be modified in various different ways, all without departing from the spirit or scope of the present invention. The drawings and description are to be regarded as illustrative in nature and not restrictive.

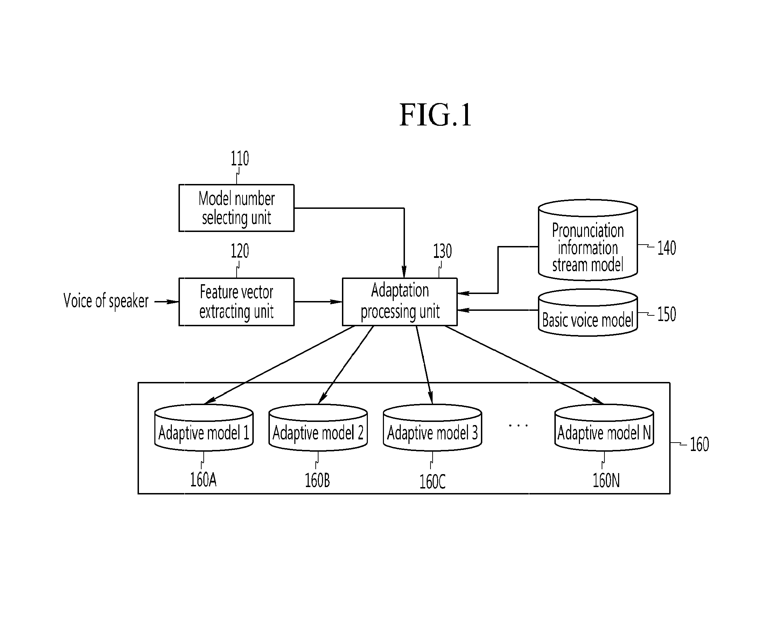

FIG. 1 is a diagram schematically showing a configuration of a multi model adaptation system according to an exemplary embodiment of the present invention.

The multi model adaptation system according to the exemplary embodiment of the present invention includes a model number selecting unit 110, a feature extracting unit 120, an adaptation processing unit 130, a pronunciation information stream model 140, a basic voice model 150, and a multi adaptive model 160.

The model number selecting unit 110 selects any one voice model designated by a speaker to execute voice adaptation and provides information regarding the voice model to the adaptation processing unit 130.

The feature extracting unit 120 extracts feature vectors (feature parameters) used in the voice model from a voice of the speaker inputted through a voice inputting member (not shown) and provides the feature vectors to the adaptation processing unit 130.

In the adaptation processing unit 130, the voice model designated by the speaker is selected through the model number selecting unit 110 and when the feature vectors (feature parameters) are extracted and applied from the inputted speaker's voice through the feature extracting unit 120, the inputted voice is adapted by applying set values to the pronunciation information stream model 140 and the basic voice model 150 and thereafter, the set values are stored in the designated model.

The adaptation processing unit 130 generates and stores a speaker identification model during adaptation to a speaker's input voice and a voice color model modeled with technical information regarding a time of a sound pressure.

The pronunciation information stream model 140 stores a reference value for adaptation to a pronunciation information stream of the extracted feature vector (feature parameter).

The basic voice model 150 stores a reference value for adaptation to voice of the extracted feature vector (feature parameter).

The multi adaptive model 160 is constituted by two or more adaptive models. Each of the adaptive models 160A to 160N is constituted by independent models including an adaptive model for each speaker, an adaptive model for the voice color, and an adaptive model grouping speakers having a similar feature. Each independent model stores an adaptive voice for each feature by speakers' designation.

Flags indicating information whether adaptation is executed are set in plural independent adaptive models constituting the multi adaptive model 160.

For example, in the case in which adaptation is executed in the model just once, the flag is set to "1" and in the case of an initial state in which adaptation is not executed, the flag is set to "0".

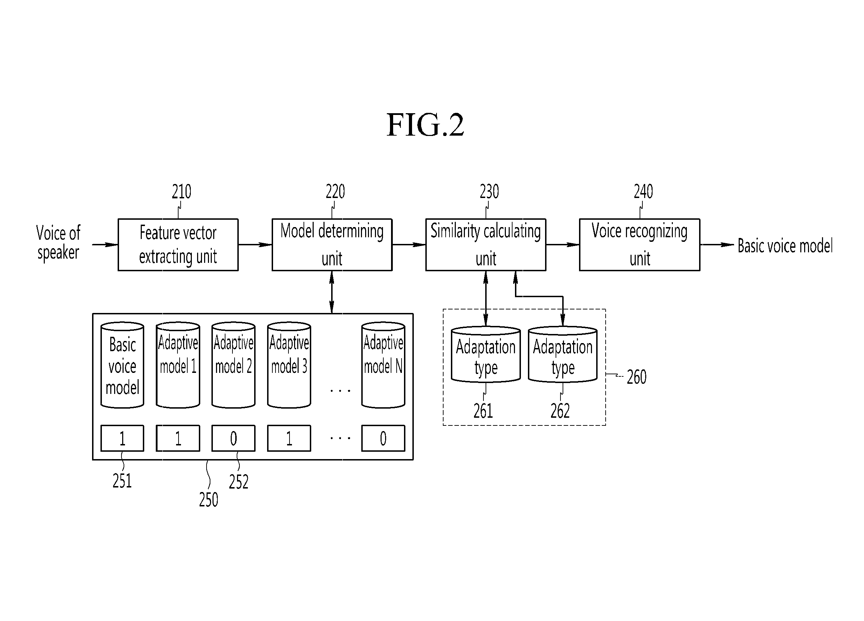

FIG. 2 is a diagram schematically showing a configuration of a voice recognition system according to an exemplary embodiment of the present invention.

The voice recognition system according to the exemplary embodiment of the present invention includes a feature extracting unit 210, a model determining unit 220, a similarity calculating unit 230, a voice recognizing unit 240, a multi adaptive model 250, and a decoding model unit 260.

The feature extracting unit 210 extracts feature vectors (feature parameters) useful for voice recognition from a voice of a speaker inputted through a voice inputting member (not shown).

The feature vectors used in voice recognition include linear predictive cepstrum (LPC), mel frequency cepstrum (MFC), perceptual linear predictive (PLP), and the like.

The model determining unit 220 sequentially selects only the adaptive models in which the flag is set to "1" (251) from the multi adaptive model 250 for voice recognition of the extracted feature vectors (feature parameters) and applies the selected adaptive models to similarity calculation and does not apply the models in which the flag is set to "0" (252) to similarity calculation.

The model determining unit 220 sequentially extracts only the speaker identification models in which the flag is set to "1" from the multi adaptive model 250 for voice recognition of the extracted feature vectors (feature parameters) and applies the selected speaker identification models to similarity calculation.

The model determining unit 220 sequentially extracts only the voice color models in which the flag is set to "1" from the multi adaptive model 250 for voice recognition of the extracted feature vectors (feature parameters) and applies the selected voice color models to similarity calculation.

The similarity calculating unit 230 calculates similarity between the feature vectors (feature parameters) extracted from the inputted voice and adaptive values stored in the selected models by considering both quantitative variation and directional changes and selects an adaptive model having the maximum similarity.

The similarity calculating unit 230 uses information regarding the sound pressure and inclination in similarity calculation for the voice models.

The voice recognizing unit 240 executes voice recognition through decoding adopting the adaptive model having the maximum similarity, a dictionary model 261 of the decoding model unit 260 previously set through a dictionary studying process, and a grammar model 262, and outputs a voice recognized result.

In the exemplary embodiment of the present invention including the above-mentioned functions, multi model adaptation is executed as follows.

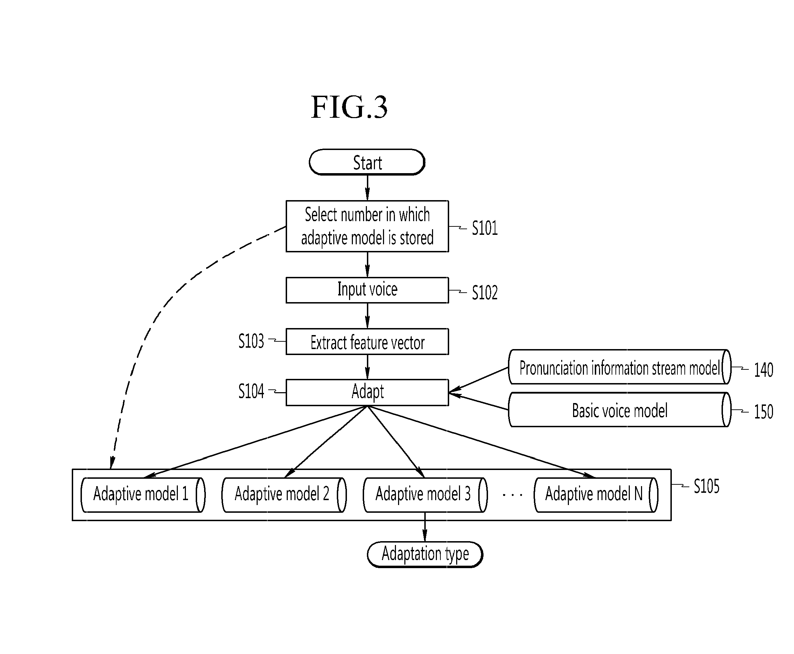

FIG. 3 is a diagram schematically showing a multi model adaptation procedure according to a first exemplary embodiment of the present invention.

First, a speaker who intends to execute voice adaptation selects any one desired model number from plural adaptive models by using a model number selecting unit 110 in order to differentiate his/her adapted model from adapted models of other speakers while preventing superimposition of the models (S101).

Accordingly, an adaption processing unit 130 allows a corresponding model having a number which the speaker selects through the model number selecting unit 110 to enter an adaptation standby mode.

Thereafter, when a voice of the speaker is inputted (S102), a feature extracting unit 120 extracts feature vectors (feature parameters) required for adaption from the inputted voice (S103) and then, applies a pronunciation information stream model 140 and a basic voice model 150 that are determined through study and previously set to execute adaptation with respect to the feature vectors (S104).

When adaptation is completed with respect to the voice of the speaker inputted through the process, the corresponding voice is stored in the adaptive model selected by the speaker in step S101 (S105) and a flag indicating execution of adaptation is set to "1 ". Thereafter, the adaptation operation is terminated.

For example, when the speaker selects an adaptive model 1 160A and inputs his/her own voice, the feature vectors are extracted and adaption is executed applying the pronunciation information stream model and the basic voice model that are previously studied and determined and the speaker stores the voice in the selected adaptive model 1 160A and a flag indicating who executes adaptation is set to "1" in the corresponding adaptive model 1 160A.

The adaptation procedure allows the speaker to execute by selecting different models according to his/her feature to prevent superimposition of adapted models of other speakers, thereby improving voice recognition rate.

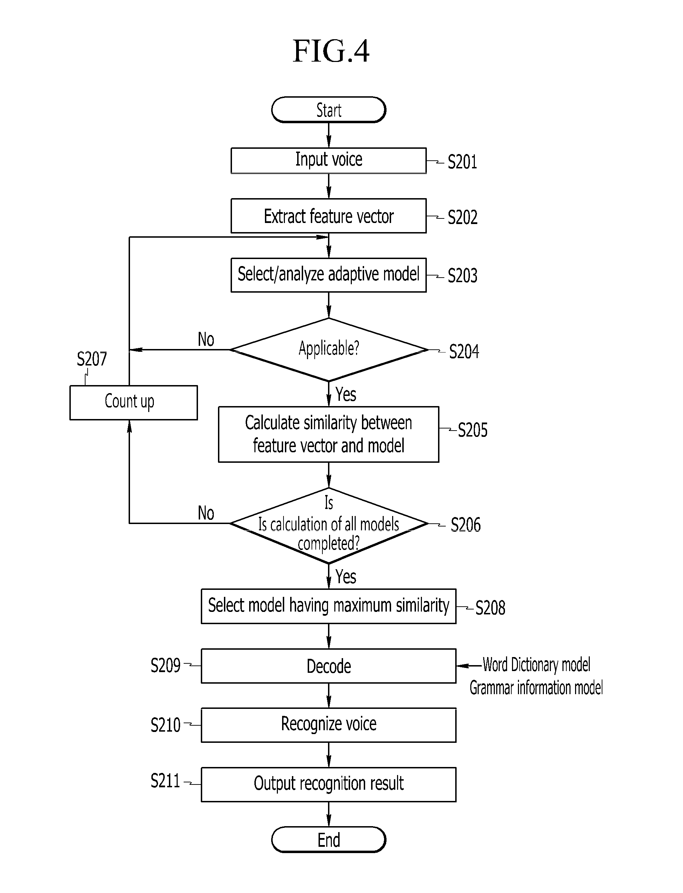

FIG. 4 is a diagram schematically showing a voice recognition procedure according to the first exemplary embodiment of the present invention.

When a voice of a speaker is inputted (S201), a feature extracting unit 210 extracts feature vectors (feature parameters) useful for voice recognition (S202).

Thereafter, only models in which adaptation is executed by a predetermined speaker by reading a flag set in the models from N multi adaptive models 250 are selected to analyze whether the selected models have similarity to the inputted voice (S203).

That is, among the N adaptive models, models 251 in which the flag is set to "1" are applied to judgment of similarity to inputted voice data and since models 252 in which the flag is set to "0" are in an initial state, the models 252 are excluded from similarity judgment.

Thereafter, it is judged whether the models selected by reading the flag can be applied to voice recognition (S204).

In step S204, when the selected model cannot be applied to voice recognition, the process of selecting and analyzing a next model is repetitively executed.

When the selected model can be applied to voice recognition in step S204, a similarity between the feature vector extracted from the inputted voice and data set in the model is calculated (S205) and it is judged whether data similarity calculation is completed in sequence with respect to all models in which the flag is set to "1" (S206).

When similarity calculation is not completed with respect to all the models in step S206, count-up for the model is executed (S207) and thereafter, the process returns to step S203 to execute sequential similarity calculation with respect all the models in which adaptation is executed.

When similarity calculation is completed with respect to all the models in step S206, a model having the maximum similarity is selected (S208) and voice recognition is executed by decoding employing a word dictionary model and a grammar information model that are previously set through study (S209 and S210).

When voice recognition is executed through the procedure, the result thereof is outputted to execute control corresponding to voice input (S211).

In general voice recognition, since N multi adaptive models and a basic model are sequentially inputted to calculate similarities between all the models and the inputted voice, a calculation quantity increases as the number of models increases, thereby being complicated.

However, in the first exemplary embodiment of the present invention, since the flag is set to "0" in models of the initial state in which adaptation is not executed once while finding a model which are most similar to the inputted voice, similarity calculation is not executed with respect to even the corresponding models and since the flag of a model in which adaptation is executed is set to "1", only the corresponding models are selected and the similarity is calculated in sequence with respect to the models, thereby providing rapid calculation.

That is, only the models in which adaptation is executed just once are selected by reading their flags and similarities are calculated with respect to the corresponding models to provide rapid calculation and the model having the most similar feature to the inputted voice is selected from models adapted differently from the basic voice model to enable real-time recognition processing according to voice input.

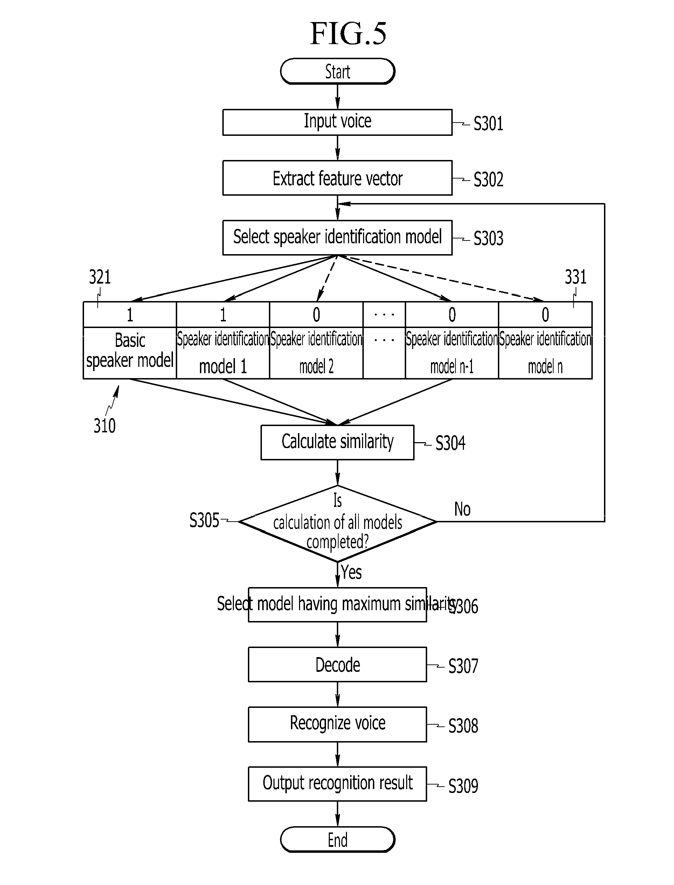

FIG. 5 is a diagram schematically showing a voice recognition procedure according to a second exemplary embodiment of the present invention.

When a voice of a speaker is inputted (S301), a feature extracting unit 210 extracts feature vectors (feature parameters) useful for voice recognition (S302).

Thereafter, by reading flags set in a basic speaker model and N speaker identification models 310, only speaker identification models 310 in which adaptation is executed are selected (S303).

That is, since models 321 of which flags are set to "1" among N speaker identification models 310 are the speaker identification models in which adaptation is executed, the corresponding models 321 are applied to calculation of similarity to inputted voice data and since models 331 of which flags are set to "0" are speaker identification model of an initial state in which adaptation is not executed once, similarity calculation is not executed with respect to the corresponding models.

When the speaker identification models 310 in which adaption is executed are selected, similarities between the feature vectors extracted from the inputted voice and set data are calculated (S304) and it is judged whether data similarity calculation is completed with respect to all the speaker identification models 310 of which the flags are set to "1" (S305).

When similarity calculation is not completed with respect to all the speaker identification models 310 in step S305, count-up for the speaker identification models 310 is executed and thereafter the process returns to step S303 to execute sequential similarity calculation with respect all the speaker identification models in which adaptation is executed.

When similarity calculation is completed with respect to all the speaker identification models 310 in judgment of step S305, a model having the maximum similarity is selected (S306) and voice recognition is executed by decoding employing a word dictionary model and a grammar information model that are previously set through study (S307 and S308).

When voice recognition is executed through the procedure, the result thereof is outputted to execute control corresponding to voice input (S309).

As described above, in the second exemplary embodiment of the present invention, the speaker identification models 310 are employed instead of the basic model and the adaptive models and only the speaker identification models 310 in which adaptation is executed are selected by reading their flags to provide model selection having higher accuracy and similarity calculation is executed with respect to the selected speaker identification models 310 to enable rapid calculation and real-time recognition processing with respect to voice input.

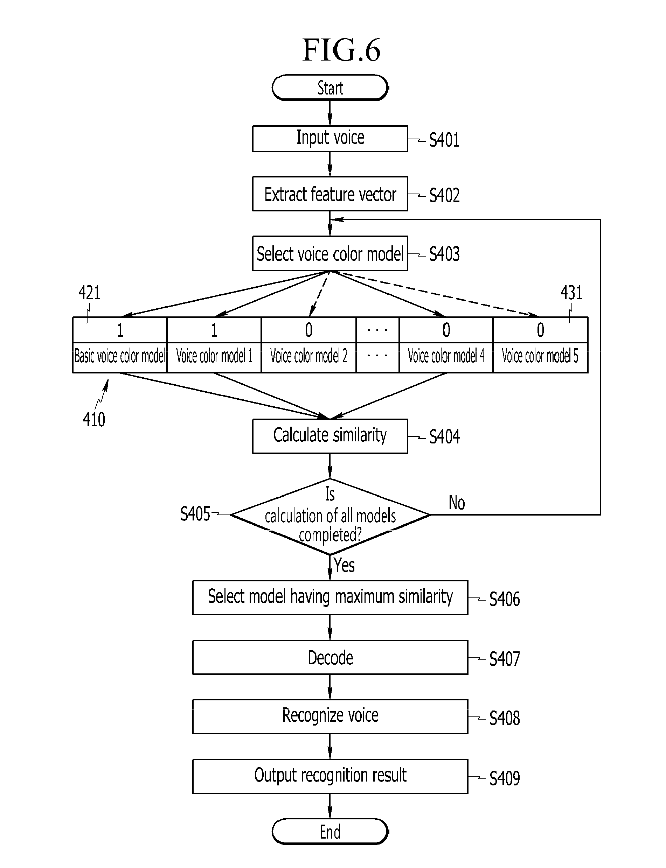

FIG. 6 is a diagram schematically showing a voice recognition procedure according to a third exemplary embodiment of the present invention.

When a voice of a speaker is inputted (S401), a feature extracting unit 210 extracts feature vectors (feature parameters) useful for voice recognition (S402).

Thereafter, by reading flags set in a basic voice color model and N voice color models 410, only voice color models 410 in which adaptation is executed are selected (S403).

That is, since models 421 of which flags are set to "1" among N voice color models 310 are the voice color models in which adaptation is executed, the corresponding models 421 are applied to judgment of similarity to inputted voice data and since models 431 of which flags are set to "0" are voice color model of an initial state in which adaptation is not executed once, similarity judgment is not executed with respect to the corresponding models.

When the voice color models 410 in which adaption is executed are selected, similarities between the feature vectors extracted from the inputted voice and data set in the voice color models are calculated (S404) and it is judged whether data similarity calculation is completed with respect to all the voice color models 410 of which the flags are set to "1" (S405).

When similarity calculation is not completed with respect to all the voice color models 410 in step S405, count-up for the voice color models 410 is executed and thereafter the process returns to step S403 to execute sequential similarity calculation with respect all the voice color models in which adaptation is executed.

When similarity calculation is completed with respect to all the voice color models 410 in judgment of step S405, a model having the maximum similarity is selected (S406) and voice recognition is executed by decoding employing a word dictionary model and a grammar information model that are set through study (S407 and S408).

When voice recognition is executed through the procedure, the result thereof is outputted to execute control corresponding to voice input (S409).

In the voice recognition method according to the third exemplary embodiment of the present invention described as above, flag processing is executed with respect to the models in which voice adaptation is executed and the similarities between the inputted voice and the adaptive models are calculated, such that the model having the most similarity to the voice inputted by the speaker is selected, thereby providing voice recognition with the minimum calculation quantity.

Since the voice color model is generated by modeling information regarding inclination to a time of a sound pressure, only the sound pressure and the inclination information are used even at the time of calculating the voice model, and as a result, the calculation quantity used for similarity calculation is smaller than that in the speaker identification algorithm of the second exemplary embodiment of the present invention.

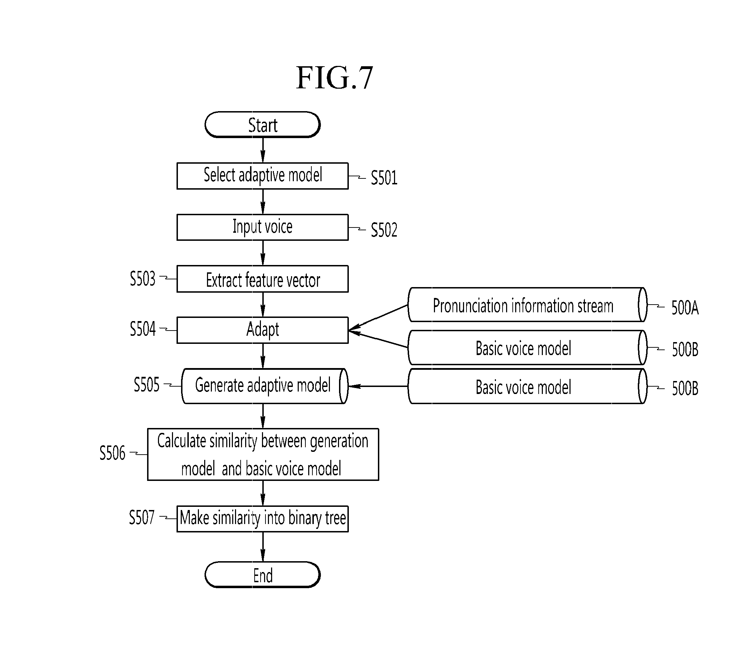

FIG. 7 is a diagram schematically showing a multi model adaptation procedure according to the second exemplary embodiment of the present invention.

When a voice adaptation procedure is executed, a speaker selects any one model of plural adaptive models by using a model number selecting unit 110 in order to prevent his/her adaptive model from being superimposed with adaptive models of other speakers (S501).

Accordingly, an adaption processing unit 130 recognizes a model number which the speaker selects through the model number selecting unit 110 to allow the corresponding model to enter an adaptation standby mode.

Thereafter, when a voice of the speaker is inputted (S502), a feature extracting unit 120 extracts feature vectors (feature parameters) of inputted voice (S503) and then, applies a pronunciation information stream model 500A and a basic voice model 500B that are previously set through study to execute adaptation with respect to the feature vector of the inputted voice (S504).

When adaption of the model selected in step S501 is completed through the process, an adaptive model is generated setting a flag to "1" in order to indicate information regarding adaptation execution (S505).

Thereafter, a similarity between adaptive data stored in the model in which adaptation is executed and data stored in the basic voice model 500B is calculated (S506) and the level of the similarity level is made into a binary tree to provide more rapid voice recognition (S507).

As described above, in the adaptation method according to the second exemplary embodiment of the present invention, the similarity between the feature vector (feature parameter) extracted from the inputted voice and the basic voice model 500B is calculated in the adaptation step and the similarity is made into the binary tree according to the similarity level to provide more rapid voice recognition.

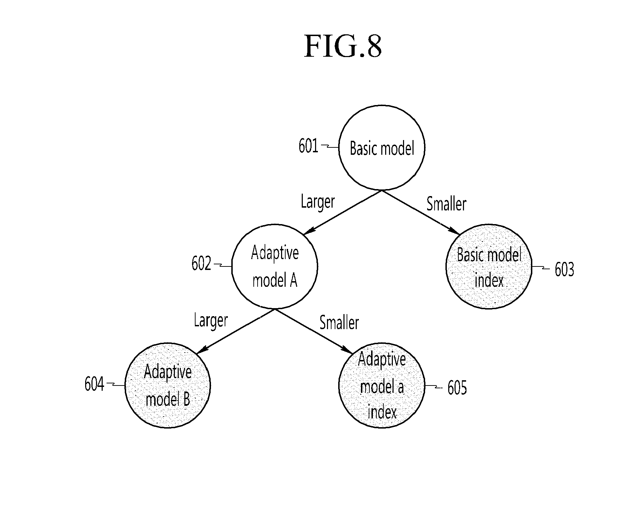

FIG. 8 is a diagram showing a similarity binary tree in the multi model adaptation procedure according to the second exemplary embodiment of the present invention.

As a method of generating a node through making the similarity into the binary tree according to the similarity level, the binary tree is generated by a method of setting an index of a corresponding parent node while locating the similarity at a left node if the similarity level is larger than that of the parent node and locating the similarity at a right node if the similarity level is smaller than that of the parent node.

A terminal node without a child nod corresponds to an index value of a model, i.e., a model number.

As shown in the figure, for example, if the terminal model is an adaptive model A 602 having a similarity level higher than that of a basic model 601 which is the parent node, the corresponding model is located to a left node of the basic model 601 and if the terminal model has the similarity level lower than that of the basic model 601 which is the parent node, an index for the basic model 601 which is the parent node is set while locating the corresponding model at a right node of the basic model 601.

The child node is retrieved through repetitively making the similarity into the binary tree to find a desired model rapidly.

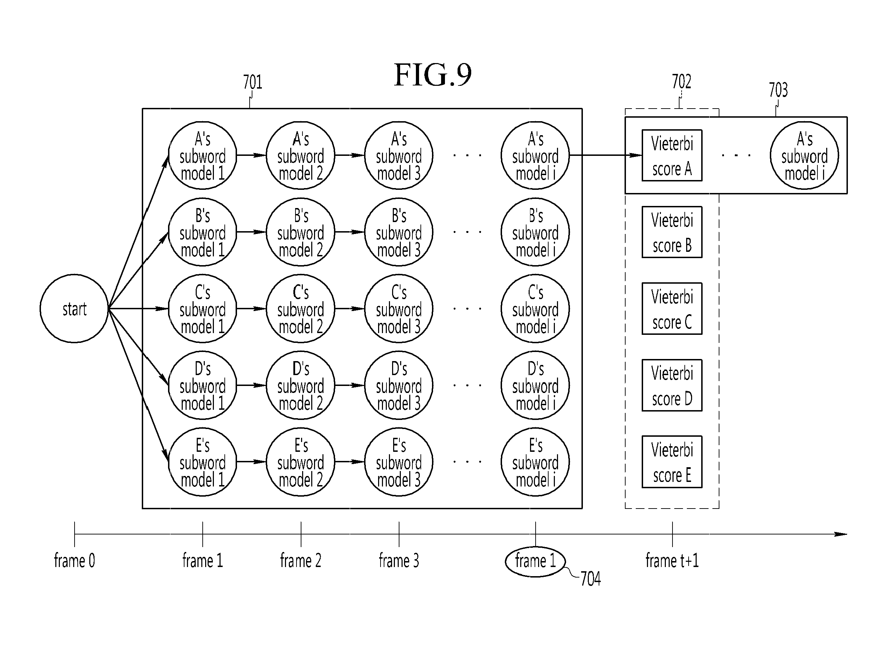

FIG. 9 is a diagram schematically showing a voice recognition procedure according to a fourth exemplary embodiment of the present invention.

As shown in the figure, when a voice for adaptation is inputted, voice recognition is performed with respect to a basic model and all adaptive models during a predetermined frame, e.g., a predetermined frame including frame 1 to frame t (S701) and voice recognition is performed by selecting only a model having the largest vieterbi score following the predetermined frame (S702 and S703).

In the voice recognition method, since subword models of all commands for all models are calculated in a calculation process during an initial predetermined frame, a calculation quantity increases, but in the case in which an examinational numerical value or a difference value of the vieterbi scores of the predetermined frame 701 is equal to or more than a predetermined value, calculation is not executed with respect to all the rest models of steps after that to minimize a similarity judgment calculation quantity of voice recognition.

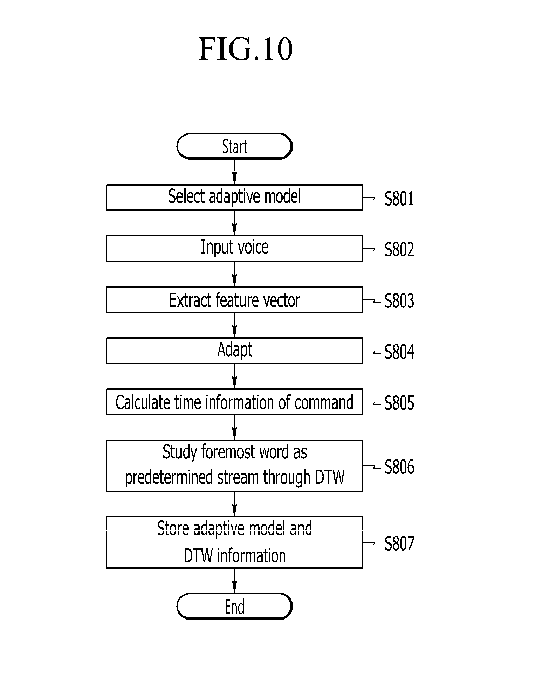

FIG. 10 is a diagram schematically showing a multi model adaptation procedure according to the third exemplary embodiment of the present invention.

The adaptation according to the third exemplary embodiment of the present invention is a method of calculating similarity between an input voice and a model by performing dynamic time warping (DTW) with respect to a feature vector (a feature parameter) up to a keyword from the input voice by using the dynamic time warping (DTW) in the case in which the same keyword is located at a foremost part of a voice command.

When the speaker selects a model which he/her intends to adopt his/her voice (S801) and thereafter, executes voice input (S802), adaptation is performed by extracting the feature vector (feature parameter) of the inputted voice (S803) and applying a pronunciation information stream model and a basic voice model that are previously determined through study (S804).

As described above, time information is calculated with respect to a feature vector (feature parameter) of a command in which adaptation (S803) is executed (S805), DTW information is studied with a dynamic time warping (DTW) model by configuring a foremost word (keyword) of a command calculated with time information by a feature stream (S806), and adaptation for voice input is terminated by storing the selected model number in which adaptation is executed and the studied dynamic time warping (DTW) information (S807).

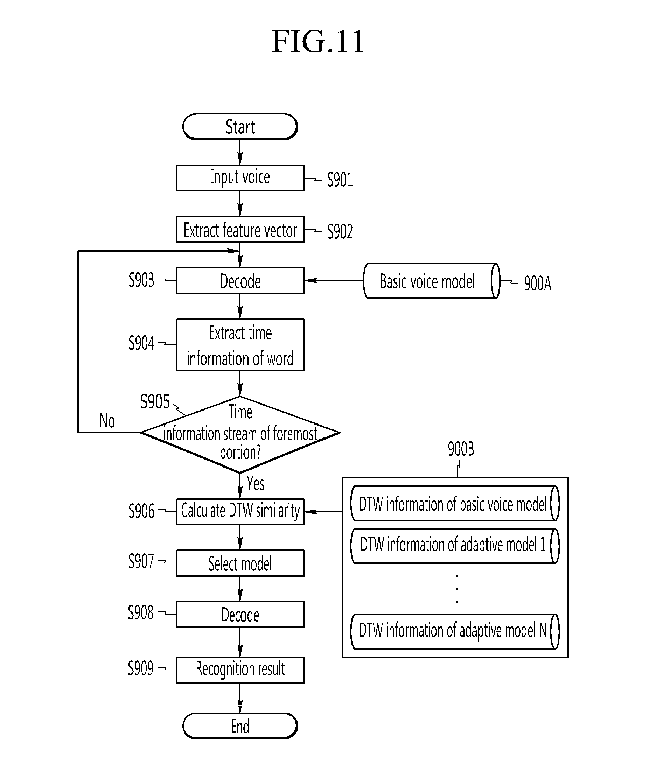

FIG. 11 is a diagram schematically showing a voice recognition procedure according to a fifth exemplary embodiment of the present invention.

A procedure of executing voice recognition by applying a model adapted through the dynamic time warping (DTW) is as follows.

When a voice of a user is inputted (S901), a feature vector (feature parameter) is extracted from the inputted voice (S902) and decoding for voice recognition is executed by applying a basic voice model 900A that is previously set through study (S903).

Time information of a word calculated during decoding of step S903 is extracted (S904) to judge whether the time information is a time information stream of a foremost word (keyword) (S905).

When the extracted time information is a time information stream that does not correspond to the foremost word (keyword) in judgment of step S905, the process returns to step S903 and when the extracted time information is a time information stream that corresponds to the foremost word (keyword), a dynamic time warping (DTW) similarity between dynamic time warping (DTW) information of a basic voice model that is previously set through study and dynamic time warping (DTW) information of each adaptive model is calculated by selecting feature vectors (feature parameters) corresponding to the time information of the foremost word (S906) to select a model having the highest similarity (S907).

When the model having the highest similarity is selected through the procedure, voice recognition is executed through decoding (S908) and an inputted voice control command is executed by outputting a recognized result (S909).

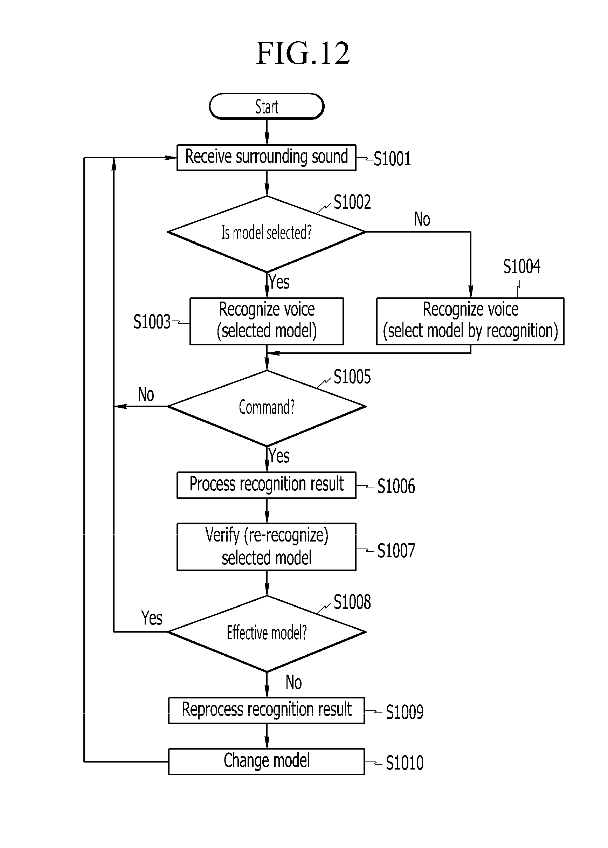

FIG. 12 is a diagram schematically showing a voice recognition procedure according to a sixth exemplary embodiment of the present invention.

In the case in which a voice recognition system is, at all times, in a voice recognition standby in order to recognize a user's command, various user's voices and noises in lives are inputted in addition to voice commands (S1001).

Accordingly, the voice recognition system judges whether a predetermined adaptive model is selected in the voice recognition standby state (S1002).

When the predetermined adaptive model is selected in judgment of step S1002, the similarities of the voice commands and various sounds in lives that are inputted in the standby state are judged through the selected adaptive model (S1003) and when the predetermined adaptive model is not selected, the voice commands inputted in the standby state and various sounds in lives are recognized and an adaptive model corresponding to the recognized voice is found to judge the similarities (S1004).

It is judged whether the voice is an appropriate command according to similarity judgment to the adaptive model (S1005) and when the voice is not the appropriate command, the process returns to step S1001 and when the voice is the appropriate command, the recognition result for the inputted voice is processed through similarity judgment (S1006).

Thereafter, verification (re-recognition) of the selected adaptive model is executed with the recognition result (S1007) to judge whether the selected adaptive model is an effective adaptive model (S1008).

When it is judged that the selected adaptive model is the effective adaptive model in judgment of step S1008, the process returns to step S1001 and the procedure is repetitively executed to perform voice recognition.

However, when it is judged that the selected adaptive model is not the effective adaptive model in judgment of step S1008, the recognition result is reprocessed (S1009) and thereafter, the adaptive model is changed and the process returns to step S1001.

For example, when there is provided a voice recognition system for controlling a home network, a user A gives a command, "Turn on a TV", but a model used in recognition is a model of a speaker B and a misrecognition result generated by a wrongly selected model is processed as a recognition result, "Turn on a light of a living room" and thus, the light of the living room may be turned on, and as a result, re-recognition is performed during postprocessing and when the corresponding model is verified as an adaptive model A and the command is judged as the command, "Turn on the TV", recognition result processing of "Turn on the TV" is performed and thereafter, the wrongly processed result is corrected.

That is, recognition of the command, "Turn on the light of the living room" that is wrongly operated is processed as recognition of a command, "Turn off the light of the living room".

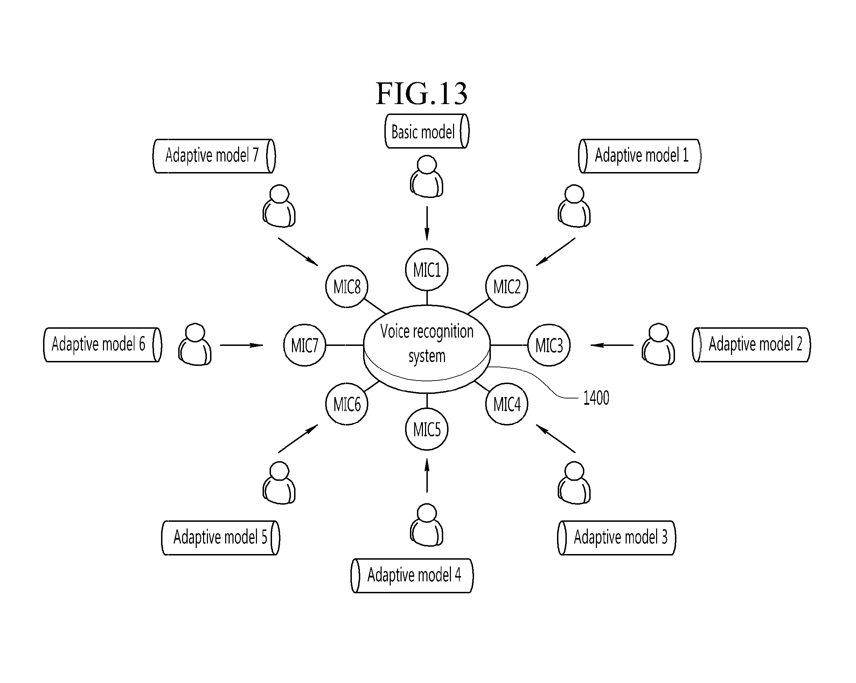

FIG. 13 is a diagram showing multi model adaptation for each position using multi microphones according to the third exemplary embodiment of the present invention.

As shown in the figure, a multi microphone system is applied to a voice recognition system 1400 and when a sound source of a speaker for adaption is inputted into a predetermined position, a position of the sound source is automatically judged using beam forming technology and adapted to a model corresponding to the position of the sound source to perform adaptation to different models according to the position of the sound source.

When the multi microphone system is applied, a position of a speaker is identified by the beam forming technology during adapting a voice of the speaker, and as a result, the adaptive model is automatically determined. Therefore, it is not necessary to select the number for a model to be adapted.

In the above method, in the case of performing voice recognition, it is judged a position from which a command is inputted and an adaptive model of the corresponding position is selected to perform voice recognition.

This provides effective voice recognition on the assumption that movement lines of different users are not probabilistically significantly changed at the corresponding position around the voice recognition system.

For example, when the position of the sound source judged through the beam forming technology is a mic No. 5 MIC5, the voice of the speaker inputted into the mic No. 5 MIC5 is adapted to an adaptive model 4 and stored and thereafter, when the voice of the speaker is recognized at the position of the mic No .5 MIC5, a similarity between the recognized voice and an adaptive value stored in the model 4 is judged to execute voice recognition.

The voice recognition system according to the exemplary embodiment of the present invention to which the multi model adaptation and the voice recognition technology are applied can provide the maximum effect when being applied to a home voice recognition product targeting a family constituted by approximately 10 persons (optimally, 5 persons) by considering the efficient use and extendibility and cost aspects of a physical memory.

When the voice recognition system is applied to the home voice recognition product in which adaptation of 10 persons or less is executed, an optimal voice recognition effect can be acquired through speaker independent and speaker dependent multi model adaptation and voice recognition systems.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### <Description of symbols>

| | |
|---|---|
| 110: Model number selecting unit | 120: Feature extracting unit |
| 130: Adaptation processing unit | |
| 140: Pronunciation information stream model | |
| 150: Basic voice model | 160: Multi adaptive model |

The following methods comprise further advantages:
A method of voice recognition, the method comprising:
   extracting feature vectors from inputted voices of speakers requesting voice recognition;
   selecting only speaker identification models by reading flags set in multi adaptive models;
   calculating similarity of adaptive values by sequentially comparing the selected speaker identification models with the feature vectors extracted from the inputted voices of the speakers; and
   selecting one model having the maximum similarity and executing voice recognition through decoding when similarity calculation for all the speaker identification models is completed.
A method of voice recognition, the method comprising:
   extracting feature vectors from inputted voices of speakers requesting voice recognition;
   selecting only voice color models by reading flags set in multi adaptive models;
   calculating similarity of adaptive values by sequentially comparing the selected voice color models with the feature vectors extracted from the inputted voices of the speakers; and
   selecting one model having the maximum similarity and executing voice recognition through decoding when similarity calculation for all the voice color models is completed.
The preceeding method, wherein:
   the similarity calculation of the voice color model uses only information regarding sound pressure and inclination.
A method of multi model adaptation, the method comprising:
   selecting any one model designated by a speaker;
   extracting a feature vector used in a voice model from an inputted voices of the speaker;
   adapting the feature vector by applying a predetermined pronunciation information model and a predetermined basic voice model and thereafter, storing the adapted feature vector in the designated model to generate an adaptive model; and
   making a similarity level into a binary tree by comparing similarity between the adaptive model generated during the process and the basic voice model.
The preceeding method, wherein:
   in making the similarity to the binary tree according to the similarity level, the binary tree is generated by a method of setting an index of a parent node while locating the similarity at a left node if the similarity is larger than the parent node and locating the similarity at a right node if the similarity is smaller than the parent node.
A method of voice recognition, the method comprising:
   extracting feature vectors from inputted voices of speakers requesting voice recognition;
   calculating similarity between a basic model and subword models of commands set in all adaptive models, and
   selecting a model having the largest vieterbi score and executing voice recognition through decoding following frame when a difference in vieterbi scores is equal to or more than a predetermined value.
A method of multi model adaptation, the method comprising:
   selecting any one model designated by a speaker;
   extracting a feature vector used in an adaptive voice model from an inputted voice of the speaker and executing adaptation;
   studying a feature vector corresponding to time information of a keyword in time information of a voice command in executing adaptation through a dynamic time warping model; and
   storing information regarding the adaptive model and the studied dynamic time warping model in the model designated by the speaker during the process.
The preceeding method, wherein:
   the studying of the dynamic time warping model is executed with respect to a voice command in which the same keyword is positioned at the foremost portion.
A method of voice recognition, the method comprising:
   extracting feature vectors from inputted voices of speakers requesting voice recognition;
   performing decoding by applying a basic voice model;
   extracting time information of a word calculated during the decoding and judging whether the extracted time information is a time information stream of a word corresponding to a keyword;
   extracting a feature vector corresponding to the time information of the word and calculating similarity between the extracted feature vector and a dynamic time warping model when the time information is the time information stream of the word corresponding to the keyword; and
   executing voice recognition through decoding by selecting a model having the maximum similarity.
A method of multi model adaptation, the method comprising:
   selecting any one model designated by a speaker;
   extracting a feature vector used in a voice model from an inputted voice of the speaker and adapting the extracted feature vector and thereafter, storing the adapted feature vector in the model designated by the speaker, and setting a flag indicating whether adaptation is executed; and
   applying at least one of a speaker identification model, a voice color model, a binary tree depending on the level of similarity, and recognition of a position of a sound source adopting a beam forming technique in the adaption execution.

## Claims

1. A system of multi model adaptation, the system comprising:
a model number selecting unit selecting any one model designated by a speaker for voice adaptation;
a feature extracting unit extracting feature vectors from a voice of the speaker inputted for adaptation;
an adaption processing unit adapting the voice of the speaker by applying predetermined reference values of a pronunciation information model and a basic voice model and thereafter, storing the corresponding voice in a model designated by the speaker, and setting a flag to a model in which adaptation is executed; and
a multi adaptive model constituted by a plurality of models and storing a voice adapted for each feature according to speaker's designation.

2. The system of claim 1, wherein:
the adaptation processing unit,
sets the flag to "1" in models in which adaptation is executed by the speaker's designation and sets the flag to "0" in models in which adaptation is not executed.

3. The system of claim 1, wherein:
the multi adaptive model,
is constituted by independent model for each speaker, independent adaptive models for voice colors, and independent adaptive models grouping speakers having a similar feature and the voice is adapted and stored in each independent model for each feature according to speakers' designations.

4. A system of voice recognition, the system comprising:
a feature extracting unit extracting feature vectors required for voice recognition from an inputted voice of a speaker;
a model determining unit sequentially selecting only models in which flags are set to adaptation from a multi adaptive model;
a similarity calculating unit extracting a model having the maximum similarity by calculating similarity between the feature vectors extracted from the inputted voice of the speaker and an adaptive values stored in the selected models; and
a voice recognizing unit executing voice recognition through decoding adopting the adaptive value stored in the model having the maximum similarity and a value stored in a model set through study.

5. The system of claim 4, wherein:
the similarity calculating unit,
calculates similarity between the feature vectors extracted from the inputted voice of the speaker and the adaptive values stored in the selected models by considering both quantitative variation and directional changes.

6. The system of claim 4, wherein:
the voice recognizing unit applies data values of a dictionary model and a grammar model set through study during decoding for voice recognition.

7. The system of claim 4, wherein:
the model determining unit
sequentially selects only speaker identification models in which flags are set from the multi adaptive model and applies the selected models to be applied to the similarity calculation.

8. The system of claim 4, wherein:
the model determining unit,
sequentially selects only voice color models in which flags are set from the multi adaptive model and applies the selected models to be applied to the similarity calculation.

9. The system of claim 4, wherein:
the similarity calculating unit,
uses only information regarding sound pressure and inclination in similarity calculation with the voice models

10. The system of claim 4, wherein:
the similarity calculating unit calculates similarity between an input voice and a model by performing dynamic time warping with respect to a feature vector up to a keyword from the input voice in the case in which the same keyword is located at a foremost part of a voice command.

11. A method of multi model adaptation, the method comprising:
selecting any one model designated by a speaker;
extracting a feature vector used in a voice model from an inputted voice of the speaker; and
adapting the extracted feature vector by using a predetermined pronunciation information model and a predetermined basic voice model and thereafter, storing the corresponding feature vector in a model designated by the speaker among the plurality of models and setting a flag indicating whether adaptation is executed.

12. The method of claim 11, wherein:
only the voice of the speaker is adapted and stored in the model selected by speaker's designation and is not superimposed on adaptive models of other speakers.

13. The method of claim 11, wherein:
a flag is set to "1" in a model in which adaptation is executed and the flag is set to "0" in an initial model in which adaptation is not executed.

14. The method of claim 11, wherein:
a speaker identification model is generated during adaptation of the inputted voice of the speaker and a flag indicating whether the speaker identification model is generated is set.

15. The method of claim 11, wherein:
information regarding inclination of sound pressure to time is modeled during adaptation of the inputted voice of the speaker to generate a voice color model and a flag indicating whether the voice color model is generated is set

16. A method of voice recognition, the method comprising:
extracting feature vectors from inputted voices of speakers requesting voice recognition;
selecting only models in which adaptation is executed by reading flags set in multi adaptive models;
calculating similarity of adaptive values by sequentially comparing the models selected by reading the flags with the feature vectors extracted from the inputted voices of the speakers; and
selecting one model having the maximum similarity and executing voice recognition through decoding when similarity calculation for all the selected models is completed.

17. The method of claim 16, wherein:
a predetermined word dictionary model and a predetermined grammar information model are applied through study during decoding to execute voice recognition.

18. A system of multi model adaptation in a system of voice recognition, wherein:
a multi microphone of which positional information is designated is applied; and
a position of a sound source inputted for adaption is judged by using a beam forming technique and the position is adapted to a corresponding model.
